# EUROPÄISCHE PATENTANMELDUNG

(11) **EP 1 528 848 A2**
(43) Veröffentlichungstag der Anmeldung: **04.05.2005**
(21) Anmeldenummer: 04025359.3
(22) Anmeldetag: 26.10.2004
(51) Int. Cl.: H05K 5/06

(54) **Elektroinstallationsgerät des Aussenbereichs**

(30) Priorität: 03.11.2003 DE 10351118
(71) Anmelder: ABB PATENT GmbH, 68526 Ladenburg (DE)
(72) Erfinder: Zapp, Robert, Dipl.-Ing., 58579 Schalksmühle (DE); Kindermann, Gerd, Dipl.-Ing., 58509 Lüdenscheid (DE)
(74) Vertreter: Miller, Toivo

(57) **Zusammenfassung**

Es wird ein Elektroinstallationsgerät des Außenbereichs, wie Bewegungsmelder, Alarmanlage, Signalgerät und Lampe, vorgeschlagen, wobei mindestens eine nach außen gerichtete Komponente (2, 3, 4) des Elektroinstallationsgeräts mit einer Oberflächenbeschichtung (5) versehen ist, welche Nanopartikel enthält und wobei diese mit Oberflächenbeschichtung (5) versehene Komponente mittels einer Schutzfolie (6) umhüllt ist, welche derart an der Komponente befestigt ist, dass einerseits ein zuverlässiger Schutz der empfindlichen Oberflächenbeschichtung (5) sichergestellt ist und dass andererseits ein Entfernen der Schutzfolie (6) nach Abschluss der Montage des Elektroinstallationsgerätes einfach möglich ist.

## Beschreibung

Die Erfindung bezieht sich auf ein Elektroinstallationsgerät des Außenbereichs. Die Erfindung kann beispielsweise bei Bewegungsmeldern, Alarmanlagen, Signalgeräten (beispielsweise Alarmsirenen und Alarmleuchten, Alarm-Blinkleuchten) und Außenlampen verwendet werden.

Aus der WO 01/62682 A1 ist eine langzeitstabile wasser- und ölabweisende Oberfläche (hydrophob und oleophob) bekannt, welche bei Fassadenelementen von Gebäuden und zusammen mit einem Schichtenaufbau aus transparenten Materialien als Scheibe oder Deckschicht von transparenten Scheiben, insbesondere Glas- oder Kunststoffscheiben, besonders bevorzugt für Solarzellen, Fahrzeuge, Flugzeuge oder Häuser verwendet werden kann. Dabei wird darauf Wert gelegt, dass die Oberflächen auch bei starker Beanspruchung infolge Bewitterung über viele Jahre stabil sind. Auf einem Substrat sind eine ein Phobierungsmittel enthaltende Reservoirschicht, eine darüber angeordnete, mit Poren versehene oder für das Phobierungsmittel durchlässige Abdeckschicht und eine durch das Phobierungsmittel gebildete Außenschicht angeordnet.

Aus der DE 198 60 135 C2 ist eine ultraphobe Oberfläche auf der Basis von Wolframcarbit bekannt, wobei eine Verwendung zur reibungsvermindernden Auskleidung von Fahrzeugkarosserien sowie Flugzeug- oder Schiffsrümpfen, als selbstreinigende Beschichtung oder Beplankung von Bauten, Dächern, Fenstern sowie keramischem Baumaterial und als rostschützende Beschichtung von Metallgegenständen angegeben ist. Allgemein zeichnen sich ultraphobe Oberflächen dadurch aus, dass der Kontaktwinkel eines Tropfens einer Flüssigkeit (Wasser, Öl), der auf der Oberfläche liegt, deutlich mehr als 90° beträgt und dass der Abrollwinkel 10° nicht überschreitet. Ultraphobe Oberflächen mit einem Randwinkel > 150° und dem genannten Abrollwinkel < 10° haben einen sehr hohen technischen Nutzen, weil sie zum Beispiel mit Wasser aber auch mit Öl nicht benetzbar sind, Schmutzpartikel an diesen Oberflächen nur sehr schlecht anhaften und diese Oberflächen selbstreinigend sind. Unter Selbstreinigung wird hier die Fähigkeit der Oberfläche verstanden, der Oberfläche anhaftende Schmutz- oder Staubpartikel leicht an Flüssigkeiten abzugeben, welche die Oberfläche überströmen.

Aus der EP 0 772 514 B1 sind selbstreinigende Oberflächen von Gegenständen und Verfahren zur Herstellung derselben bekannt, wobei die Selbstreinigung vorzugsweise dadurch erfolgt, dass die Oberfläche von Zeit zu Zeit Regen oder bewegtem Wasser ausgesetzt ist. Als Anwendungen sind lichtdurchlässige Verglasungen von Gebäuden, Fahrzeugen, Sonnenkollektoren, selbstreinigende Oberflächen bei Hausfassaden, Dächern, Denkmälern und Zeiten, Innenbeschichtungen von Silos, Tanks oder Rohrleitungen sowie Außenbeschichtungen von Fahrzeugen genannt.

Aus der DE 10118 352 A1 sind selbstreinigende Oberflächen durch hydrophobe Strukturen und Verfahren zu deren Herstellung bekannt. Es wird eine geeignete, zumindest teilweise hydrophobe Oberflächenstruktur durch Fixieren von Partikeln mittels eines Trägers auf einer Oberfläche geschaffen. Die Partikel weisen zerklüftete Strukturen mit Erhebungen und / oder Vertiefungen im Nanometerbereich auf. Die Partikel weisen zumindest ein Material, ausgewählt aus Silikaten, dotierten Silikaten, Mineralien, Kieselsäuren, Metallpulvern oder Polymeren auf. Als Träger wird eine härtbare Substanz (Lack) verwendet.

Der Erfindung liegt die Aufgabe zugrunde, ein Elektroinstallationsgerät des Außenbereichs anzugeben, welches über einen langen Zeitraum eine selbstreinigende Oberfläche aufweist.

Diese Aufgabe wird für ein Elektroinstallationsgerät des Außenbereichs, wie Bewegungsmelder, Alarmanlage, Signalgerät und Lampe erfindungsgemäß dadurch gelöst, indem mindestens eine nach außen gerichtete Komponente des Elektroinstallationsgeräts mit einer Oberflächenbeschichtung versehen ist, welche Nanopartikel enthält und indem diese mit Oberflächenbeschichtung versehene Komponente mittels einer Schutzfolie umhüllt ist, welche derart an der Komponente befestigt ist, dass einerseits ein zuverlässiger Schutz der empfindlichen Oberflächenbeschichtung sichergestellt ist und dass andererseits ein Entfernen der Schutzfolie nach Abschluss der Montage des Elektroinstallationsgerätes einfach möglich ist.

Die mit der Erfindung erzielbaren Vorteile bestehen insbesondere darin, dass die Oberflächen des Elektroinstallationsgerätes nach erfolgter Montage über einen längeren Zeitraum frei von Schmutzpartikeln sind, da eine Selbstreinigung durch Regenwasser erfolgt, wobei während der Montage selbst eine Beschädigung der empfindlichen Oberflächenbeschichtung zuverlässig vermieden wird.

Weitere Vorteile sind aus der nachstehenden Beschreibung ersichtlich.

Vorteilhafte Ausgestaltungen der Erfindung sind in den Unteransprüchen gekennzeichnet.

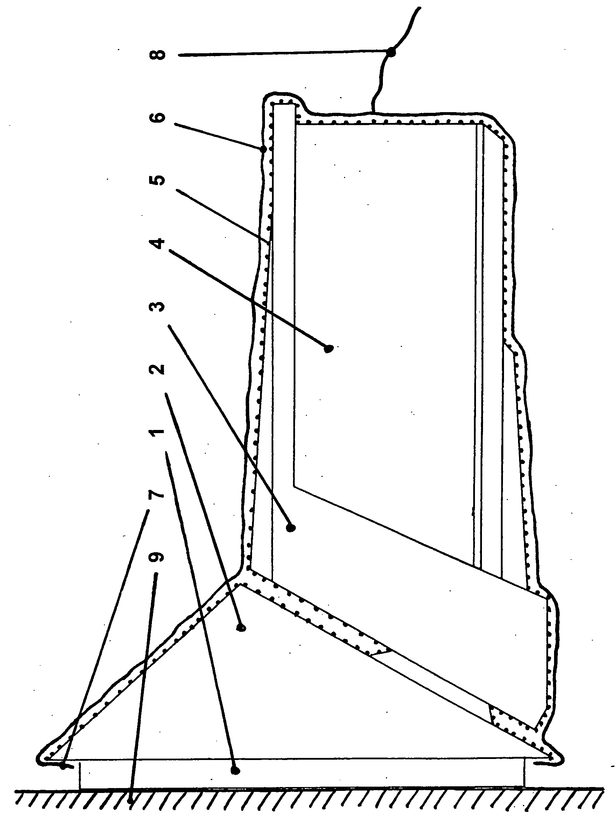

Die Erfindung wird nachstehend anhand des in der Zeichnung dargestellten Ausführungsbeispieles erläutert. In der einzigen Fig. ist ein an einer Hauswand 9 befestigter Bewegungsmelder im Schnitt dargestellt, welcher in allgemein bekannter Art und Weise besteht aus
■ einem an der Hauswand 9 mechanisch zu befestigendem Montagesockel 1, wobei der Montagesockel 1 mit einem Steck-Anschlusssystem zur Befestigung der aus einem Installationskanal aus der Hauswand geführten elektrischen Anschlussleitungen versehen ist,
■ einem Bewegungsmelder-Hauptkörper 2, der insbesondere die Elektronikschaltungen des Bewegungsmelders enthält, mittels eines Steckers des Steck-Anschlusssystems elektrisch am Montagesockel 1 befestigbar ist und mittels miteinander korrespondierender Rastnasen / Rastnuten-Verbindungen mechanisch am Montagesockel 1 verrastet,
■ einem schwenkbaren Sensor 3 und
■ einer Transparentabdeckung 4 der Erfassungslinse des Sensors 3.

Es ist in der Fig. in schematischer Form punktiert gezeigt, dass die nach außen gerichteten Oberflächen der Komponenten des Bewegungsmelders, wie Bewegungsmelder-Hauptkörper 2 sowie Sensor 3 inklusive Transparentabdeckung 4 lückenlos mit einer Oberflächenbeschichtung 5 versehen sind, welche Nanopartikel (= Partikel im Nanometerbereich, welche an der Oberfläche hydrophob wirken) enthält, um den bekannten Lotus-Effekt zu erzeugen. An den so mit einer Oberflächenbeschichtung 5 behandelten Oberflächen haftet kein Wasser. Entsprechend der Außenbewitterung auf diese Oberflächen aufgebrachter Schmutz läuft mit dem Wasser (natürliche Bewitterung, Regenwasser) einfach ab. Es spielt dabei keine Rolle, ob es sich bei den mit der Oberflächenbeschichtung 5 versehenen Komponenten des Elektroinstallationsgerätes um Kunststoffteile oder Metallteile handelt. Die Oberflächenbeschichtung 5 kann beispielsweise erfolgen, indem eine Flüssigkeit auf die Oberflächen des Elektroinstallationsgerätes aufgesprayt wird, in welcher die Nanopartikel eingebunden sind, wobei diese Flüssigkeit anschließend verdampft oder aushärtet. Hinsichtlich konkreter Materialien für die Oberflächenbeschichtung 5 wird auf den eingangs genannten bekannten Stand der Technik hingewiesen.

Das Problem ist nun, dass diese Oberflächenbeschichtung 5 mechanisch nicht sehr belastbar ist. Es besteht das große Risiko, dass während der Montage des Elektroinstallationsgerätes die empfindliche Oberflächenbeschichtung 5 durch manuelle Montageschritte und / oder durch Einsatz von Werkzeugen zumindest teilweise beschädigt wird. Selbst ein Fingerabdruck wäre schon störend bzw. zerstörend für die Oberflächenbeschichtung 5. Aus diesem Grund werden die mit der Oberflächenbeschichtung 5 versehenen Baukomponenten des Elektroinstallationsgerätes unmittelbar nach Auftrag und Trocknung / Aushärtung der Oberflächenbeschichtung 5 und bis zur Beendigung der Montage des Elektroinstallationsgerätes durch eine Schutzfolie 6 geschützt. Die Schutzfolie 6 besteht vorzugsweise aus PET (Polyethylenterephthalat).

Die Schutzfolie 6 kann maschinell "geskinnt" oder auch manuell auf das Elektroinstallationsgerät angebracht / aufgebracht werden.

Von Wichtigkeit ist es, dass durch die das Elektroinstallationsgerät umhüllende Schutzfolie 6 die Montage des Elektroinstallationsgerätes nicht behindert wird. Auf der anderen Seite ist es vorteilhaft, wenn durch bestimmte Maßnahmen sichergestellt ist, dass die Schutzfolie 6 dauerhaft bis zum Abschluss der Montagearbeiten am Elektroinstallationsgerät verbleibt. Wie auch in der Zeichnung erkennbar ist, wird dies erzielt, indem die Schutzfolie 6 im dem Montagesockel 1 (bzw. der Hauswand 9) zugewandten Randbereich 7 um den Bewegungsmelder-Hauptkörper 2 greift, d. h. die Schutzfolie 6 greift über eine der Hauswand 9 zugewandte, nach erfolgter Montage nicht sichtbare Oberfläche des Elektroinstallationsgerätes, welche nicht mit Oberflächenbeschichtung 5 versehen ist, ohne dabei jedoch das Aufrasten des Bewegungsmelder-Hauptkörpers 2 auf den Montagesockel 1 zu behindern. Ganz allgemein ist es zu vermeiden, dass die Schutzfolie 6 nach erfolgter Montage durch Montagemittel (beispielsweise Schrauben) fixiert ist, denn dies würde naturgemäß zu Problemen bei der anschließend erforderlichen Entfernung der Schutzfolie 6 führen.

Alternativ oder auch zusätzlich zum vorstehend beschriebenen abschnittsweisen Überlappen der Schutzfolie 6 über einen Randbereich des mit Oberflächenbeschichtung 5 versehenen Elektroinstallationsgerätes zum Zwecke der dauerhaften Halterung bis zum Abschluss der Montagearbeiten kann die Schutzfolie 6 auch an einigen ausgesuchten Punkten zusätzlich zum "Skinnen" fixiert werden, um einerseits ein leichtes Loslösen bzw. Ablösen vom Elektroinstallationsgerät zu verhindern, andererseits jedoch ein schnelles Entfernen nach Abschluss der Montagearbeiten zu ermöglichen.

Das Entfernen der Schutzfolie 6 nach Abschluss der Montagearbeiten muss behutsam und möglichst ohne Werkzeugeinsatz, insbesondere ohne den Einsatz von Spezial- und Sonderwerkzeug erfolgen, um einerseits jedwede Beschädigung der Oberflächenbeschichtung 5 zu vermeiden und andererseits keinen zusätzlichen Montageaufwand zu erzeugen. Bestenfalls wäre eine Pinzette als beim Entfernen hilfreiches Werkzeug akzeptierbar. Eine gute Möglichkeit, das Entfernen der Schutzfolie 6 vom montierten Elektroinstallationsgerät zu erleichtern, besteht darin, eine Schutzfolie 6 mit in der Folie eingeschweißtem Reißfaden 8 zu verwenden. Der Reißfaden 8 ist dabei derart in die Schutzfolie 6 einzuschweißen, dass die Schutzfolie 6 nach dem Ziehen am Reißfaden 8 in zwei Abschnitte zerschnitten wird, welche beide leicht vom montierten Elektroinstallationsgerät abgezogen werden können.

Auch wenn es sich beim vorstehend beschriebenen Ausführungsbeispiel konkret um einen Bewegungsmelder handelt, ist die Erfindung auch bei anderen Elektroinstallationsgeräten des Außenbereichs, wie Alarmanlagen, Signalgeräten und Lampen mit Erfolg anwendbar.

### Bezugszeichenliste:

- 1: Montagesockel
- 2: Bewegungsmelder-Hauptkörper
- 3: Sensor
- 4: Transparentabdeckung der Erfassungslinse
- 5: Oberflächenbeschichtung
- 6: Schutzfolie
- 7: Randbereich
- 8: Reißfaden
- 9: Hauswand

## Patentansprüche

1. Elektroinstallationsgerät des Außenbereichs, wie Bewegungsmelder, Alarmanlage, Signalgerät und Lampe, wobei mindestens eine nach außen gerichtete Komponente (2, 3, 4) des Elektroinstallationsgeräts mit einer Oberflächenbeschichtung (5) versehen ist, welche Nanopartikel enthält und wobei diese mit Oberflächenbeschichtung (5) versehene Komponente mittels einer Schutzfolie (6) umhüllt ist, welche derart an der Komponente befestigt ist, dass einerseits ein zuverlässiger Schutz der empfindlichen Oberflächenbeschichtung (5) sichergestellt ist und dass andererseits ein Entfernen der Schutzfolie (6) nach Abschluss der Montage des Elektroinstallationsgerätes einfach möglich ist.

2. Elektroinstallationsgerät nach Anspruch 1, **dadurch gekennzeichnet, dass** die Schutzfolie (6) über eine nach erfolgter Montage nicht sichtbare Oberfläche, insbesondere über einen Randbereich (7) des Elektroinstallationsgerätes greift, welcher nicht mit Oberflächenbeschichtung (5) versehen ist und wodurch die Montage nicht behindert wird.

3. Elektroinstallationsgerät nach Anspruch 1 und / oder 2, **dadurch gekennzeichnet, dass** die Schutzfolie (5) an einigen ausgesuchten Punkten fixiert ist, um einerseits ein leichtes Loslösen bzw. Ablösen vom Elektroinstallationsgerät zu verhindern, andererseits jedoch ein schnelles Entfernen nach Abschluss der Montagearbeiten zu ermöglichen.

4. Elektroinstallationsgerät nach einem der vorstehenden Ansprüchen, **dadurch gekennzeichnet, dass** eine Schutzfolie (6) mit in der Folie eingeschweißtem Reißfaden (8) vorgesehen ist, wobei der Reißfaden (8) derart in die Schutzfolie (6) eingeschweißt ist, dass die Schutzfolie (6) nach dem Ziehen am Reißfaden (8) in zwei Abschnitte zerschnitten wird, welche beide leicht vom montierten Elektroinstallationsgerät abziehbar sind.
